# FASCICULE DE BREVET EUROPEEN

(11) **EP 3 161 548 B1**
(45) Date de publication et mention de la délivrance du brevet: **20.06.2018**
(21) Numéro de dépôt: 16716167.8
(22) Date de dépôt: 15.03.2016
(51) Int. Cl.: G02C 9/04, G02C 1/06

(54) **LUNETTE À MONTURE PERSONNALISABLE**
BRILLE MIT PERSONALISIERBAREM BRILLENGESTELL
SPECTACLES WITH CUSTOMISABLE FRAME

(30) Priorité: 19.03.2015 IT UB20159237; 27.04.2015 EP 15165282
(43) Date de publication de la demande: 03.05.2017
(73) Titulaire: SWATCH AG, 2502 Biel/Bienne (CH)
(72) Inventeur: GIORDANETTI, Carlo, 8008 Zürich (CH)
(74) Mandataire: Ravenel, Thierry Gérard Louis
(86) Numéro de dépôt international: PCT/EP2016/055606
(87) Numéro de publication internationale: WO 2016/146643

(56) Documents cités:
- WO-A1-2006/043941
- CA-A1- 2 082 400
- FR-A1- 2 870 012
- US-A- 2 887 008
- US-A- 3 040 623
- US-A- 4 685 782
- US-A- 5 943 114
- US-B2- 6 786 593

## Description

### Domaine de l'invention

L'invention se rapporte au domaine des lunettes, aussi bien de vue que solaire, et vise plus particulièrement la personnalisation des lunettes par le biais d'un élément de parure.

### Arrière-plan de l'invention

Des solutions de lunettes combinées sont connues, dans lesquelles les moyens d'accouplement de l'élément de personnalisation avec l'élément de façade prévoient l'engagement d'appendices en saillie à partir de l'élément de personnalisation dans des évidements correspondants ménagés sur l'élément de façade.

Pour garantir la retenue réciproque entre les parties accouplées, il est connu de prévoir des systèmes d'accouplement, par exemple avec serrage c'est-à-dire par encastrement élastique, qui s'avèrent toutefois plutôt complexes du point de vue de la construction, en raison de l'usinage et des composants nécessaires, ou encore ne s'avèrent pas particulièrement pratiques et commodes dans les opérations de montage et démontage de l'élément de personnalisation sur l'élément de façade.

Certaines solutions connues nécessitent également que l'élément de personnalisation ou l'élément de façade doivent être déformés élastiquement pour permettre le positionnement relatif correct qui garantisse leur retenue réciproque. Des solution de lunettes avec une partie clipsée ou insérée sont connues des demandes de brevet CA2082400, US3040623, US2887008.

### Résumé de l'invention

L'invention est définie dans les revendications. Elle a pour objectif de fournir des lunettes aisément personnalisables, notamment sans l'utilisation d'un outil.

L'invention a également pour objectif, au moins dans un mode de réalisation particulier, de fournir une personnalisation de lunettes qui soit simple à mettre en oeuvre et peu coûteuse.

Ces objectifs, ainsi que d'autres qui apparaîtront plus clairement par la suite, sont atteints selon l'invention à l'aide de lunettes constituées d'un élément de façade destiné à être relié à deux branches latérales, au moins un élément de personnalisation supportant des verres et configuré pour être fixé de manière amovible sur l'élément de façade par l'intermédiaire de moyens de maintien complémentaires.

Selon l'invention, les moyens de maintien complémentaires comprennent d'une part, au moins un téton, faisant saillie sensiblement perpendiculairement à partir de la face arrière de l'élément de personnalisation, et d'autre part, au moins une découpe, formée dans l'élément de façade, la découpe étant agencée pour se déformer élastiquement de manière à exercer une force de rappel élastique sur le téton après son introduction dans la découpe pour maintenir élément de personnalisation sur l'élément de façade

Selon un mode de réalisation préférentiel de l'invention, les moyens de maintien complémentaires comprennent une lame élastique en forme de C dans la découpe, la lame élastique comprenant une première branche venant de matière avec l'élément de façade, et un seconde branche élastique libre.

Conformément à d'autres variantes avantageuses de l'invention :
- la seconde branche élastique libre est agencée pour se déformer dans le plan de l'élément de façade ;
- la découpe comprend un dégagement facilitant la déformation de la lame élastique dans le plan de l'élément de façade;
- l'ouverture présente une forme en trou de serrure, à savoir une base trapézoïdale surmontée d'un cercle, le haut de la base trapézoïdale formant un passage plus étroit de manière à former un point dur lors du passage du téton dans l'ouverture ;

- le diamètre du cercle de l'ouverture est sensiblement identique au diamètre du téton ;
- l'élément de personnalisation comprend au moins une gouttière munie d'une rigole débouchant vers le haut, disposée dans une zone supérieure de l'élément de personnalisation, la rigole étant configurée pour recevoir tout ou partie de l'élément de façade ;
- la gouttière comprend une couche d'un matériau déformable élastiquement disposé sur le fond de la rigole ;
- l'élément de façade est formé à partir d'une seule partie découpée et pliée ;
- l'élément de façade est réalisé à partir d'un matériau ferromagnétique et le téton est réalisé en un matériau magnétique de manière à renforcer le maintien de l'élément de personnalisation en position contre l'élément de façade ;
- le téton comprend un fût attaché à l'élément de personnalisation, le fût se terminant par un renflement radial, et la longueur du fût étant sensiblement identique à l'épaisseur de l'élément de façade ;
- le téton vient de matière avec l'élément de personnalisation ;
- la découpe comprend une paire de lames élastiques réalisées avec une symétrie spéculaire par rapport à un plan médian de symétrie de la découpe correspondante dirigé transversalement par rapport à l'élément de façade ;
- l'élément de façade et la lame élastique ont la même épaisseur ;
- l'élément de façade (2) est réalisé en matière plastique.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue en perspective d'une paire de lunettes conforme à l'invention ;
- la figure 2 est une vue de face d'un élément de façade conforme à l'invention ;
- les figures 3a et 3b sont, respectivement, une vue en perspective d'un élément de personnalisation et une vue détaillée d'un moyen de maintien conforme à l'invention ;
- la figure 4 est une vue en coupe selon la ligne I des lunettes illustrées à la figure 1,
- les figure 5a à 5c illustrent les différentes formes de l'élément de personnalisation conforme à l'invention ;
- la figure 6a est une vue détaillée d'un moyen de maintien conforme à l'invention selon un premier mode de réalisation ;
- la figure 6b est une vue détaillée d'un moyen de maintien conforme à l'invention selon un deuxième mode de réalisation.

### Description détaillée des modes de réalisation préférés

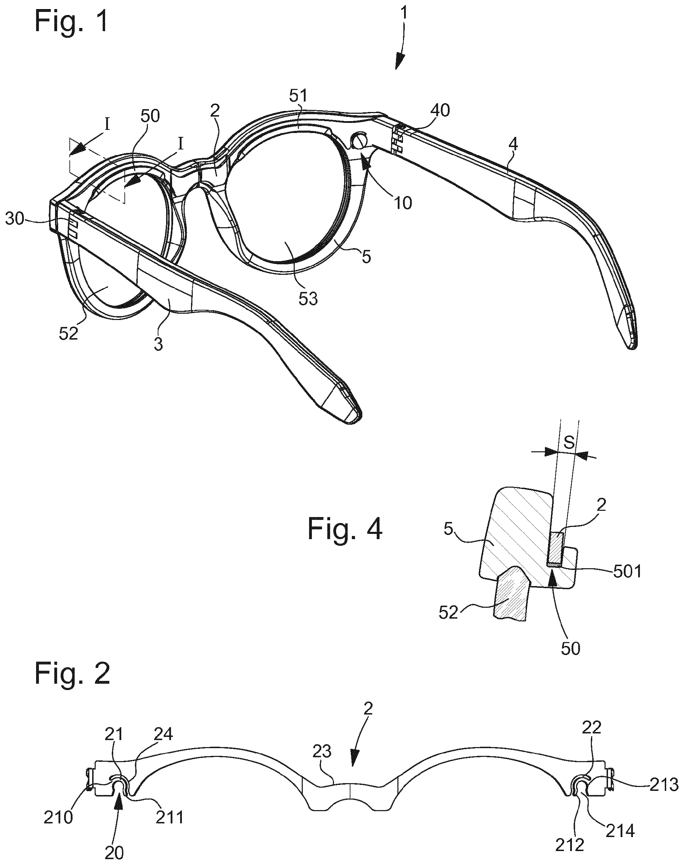

Une paire de lunettes conforme à l'invention va maintenant être décrite dans ce qui suit faisant référence conjointement aux figures 1, 2, 3a, 3b, 4, 5a à 5c, 6a et 6b.

L'invention concerne des lunettes 1 constituées d'un élément de façade 2 formé par un pont 23 qui est destiné à être relié à deux branches latérales 3 et 4 par l'intermédiaire de charnières correspondantes 30 et 40. Les lunettes 1 comprennent également un élément de personnalisation 5 configuré pour être fixé de manière amovible sur l'élément de façade 2 par l'intermédiaire de moyens de maintien complémentaires.

Les moyens de maintien complémentaires comprennent d'une part, au moins un téton 10, faisant saillie sensiblement perpendiculairement à partir de la face arrière de l'élément de personnalisation 5, et d'autre part, au moins une découpe 20, formée dans l'élément de façade 2, la découpe 20 étant agencée pour se déformer élastiquement de manière à exercer une force de rappel élastique sur le téton 10 après son introduction dans la découpe 20 pour maintenir élément de personnalisation 5 sur l'élément de façade 2.

Selon un premier mode de réalisation de l'invention, un téton 10 est disposé au niveau du coin supérieur gauche et du coin supérieur droit de la face arrière de l'élément de personnalisation 5, chaque téton 10 étant configuré pour coopérer avec une découpe 20 respectif disposé à chaque extrémité de l'élément de façade 2.

Selon un mode de réalisation préférentiel de l'invention, illustré sur les figures, les moyens de maintien complémentaires comprennent une lame élastique 21 en forme de C dans la découpe 20, la lame élastique 21 comprenant une première branche 210 venant de matière avec l'élément de façade 2, et un seconde branche élastique libre 211.

Avantageusement, la seconde branche élastique libre 211 est agencée pour se déformer dans le plan de l'élément de façade. Par ailleurs, la découpe 20 comprend un dégagement 22, autour de la lame élastique 21, pour faciliter la déformation de la lame élastique 21 quand le pion 10 est introduit dans la découpe 20.

L'élément de façade 2 peut être formé d'une seule partie découpée puis pliée pour sa mise en forme, et peut être réalisé à partir d'une plaque ou une bande métallique. Une opération d'étampage peut également être envisagée pour obtenir l'élément de façade 2, à partir d'une plaque métallique de faible épaisseur S.

Comme on peut le voir à la figure 2, la lame élastique 21 fait partiellement le tour de la découpe 20 de manière à former un passage plus étroit que le téton 10 et maintenir le téton 10 dans la découpe 20 lorsque l'élément de personnalisation 5 est rapporté sur l'élément de façade 2 selon un plan vertical parallèle à l'élément de personnalisation par exemple. Ainsi, la fixation l'élément de personnalisation 5 sur l'élément de façade 2 peut se faire de haut en bas ou de bas en haut suivant la position de la découpe 20.

Selon l'invention, le téton 10 est lié à l'élément de personnalisation 5 et présente, dans le sens de sa longueur, une forme de champignon. Le téton 10 comprenant un fût 11, ou un pied sensiblement cylindrique, dressé à partir de l'élément de personnalisation 5, qui fait saillie de cet élément de personnalisation 5 selon une direction axiale Z, et qui se termine par un renflement radial 12, ou une tête élargie par rapport au fût 11.

De préférence, les tétons 10 sont obtenus d'une seule pièce avec l'élément de personnalisation 5, ce dernier pouvant être réalisé en matière plastique par exemple.

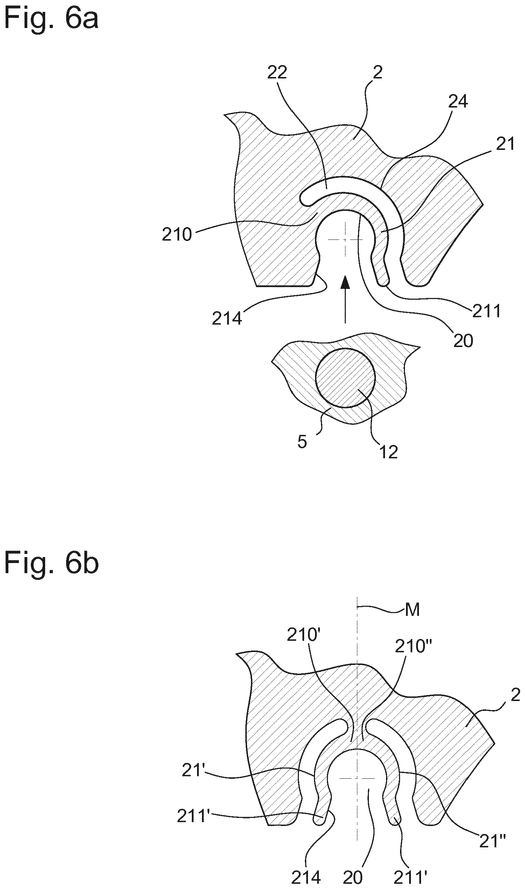

Telle que représentée à la figure 6a, la découpe 20 est en forme de trou de serrure, à savoir une base trapézoïdale 212 surmontée d'un cercle 213, le haut de la base trapézoïdale 212 formant un passage plus étroit de manière à former un point dur lorsque le fût 11 du téton 10 passe dans la découpe 20. Chaque découpe 20 présente également une embouchure 214 réalisée au niveau de la base trapézoïdale 212 pour le passage du téton 10.

La conformation incurvée de la lame élastique 21 est choisie de telle manière que ce profil puisse entourer avec un accouplement de forme substantiel le fût 11 du pion 10, quand ce dernier est inséré dans la découpe 20, à la suite de l'accouplement entre l'élément de façade 2 et l'élément de personnalisation 5.

Avantageusement, le diamètre du cercle est sensiblement identique au diamètre du fût 11 du téton 10. De même, la longueur du fût 11 du téton 10 est choisie avantageusement égale, à moins d'une tolérance dimensionnelle réduite, à l'épaisseur S de l'élément de façade 2, de sorte que, dans la condition d'accouplement de du téton avec la découpe 20, une retenue axiale stable de l'élément de personnalisation 5 soit garantie.

Comme on peut l'observer à la figure 2, le dégagement 22 définit le débattement possible de la lame élastique 21, l'élément de façade 2 présentant une surface de contact 24 jouant le rôle de butée de manière que la lame flexible 21 ne dépasse pas sa limite de déformation élastique.

Grâce à cet agencement, chaque lame élastique 21 est déplacée de sa position de repos dans le plan de l'élément de façade 2 au passage du fût 11 du téton 10, jusqu'à ce que le fût 11 passe le point dur et se loge dans le cercle 213, chaque lame élastique 21 reprenant sa position de repos une fois que le fût 11 est logé dans le cercle 213, le téton 10 étant alors maintenu en place dans la découpe 20.

Durant l'introduction, le fût 11 du téton interfère, en correspondance de l'embouchure 214, avec la seconde branche élastique libre 211 de la lame élastique 21, ce mouvement entraînant un écartement élastique de la lame élastique 21 avec un retour successif dans la condition d'accouplement de forme avec le fût 11, quand ce dernier est complètement reçu dans le cercle 213 de la découpe 20.

Bien évidemment, d'autres formes peuvent être imaginées pour les moyens de maintien complémentaires.

L'épaisseur S de l'élément de façade 2 est prévue inférieure ou égale à la longueur du fût 11 du téton 10 pour faciliter la fixation de l'élément de personnalisation 5 sur l'élément de façade 2. De plus, le renflement radial 12 du téton 10 peut former une butée suivant la direction axiale Z du téton 10, de manière à empêcher l'élément de personnalisation 5 de coulisser le long du fût 11 du téton 10 et de se détacher de l'élément de façade 2.

Selon un autre mode de réalisation de l'invention, illustré à la figure 6b, il est prévu que dans chacune des découpes 20 soit logée une paire de lames élastiques 21' et 21", avec une symétrie spéculaire entre elles par rapport à un plan médian transversal de la découpe (dont l'intersection avec l'élément de façade 2 est identifiée par la direction axiale M indiquée sur la figure 6b). Les lames élastiques 21' et 21" sont prévues pour délimiter conjointement avec l'élément de façade 2 la découpe 20 destinée à être recevoir le téton 10.

Chaque lame élastique 21', 21" présente un profil incurvé, sensiblement analogue à celui de la lame élastique 21, et comprenant chacune une première branche 210', 210" venant de matière avec l'élément de façade 2, et un seconde branche élastique libre 211', 211". Ainsi, les branches élastiques libres 211', 211" forment l'embouchure 214 réalisée au niveau de la base trapézoïdale 212.

L'introduction du fût 11 du téton 10 dans la découpe 20 s'effectue avec un écartement élastique des lames élastiques 21' et 21" (en s'éloignant l'une de l'autre) avec retour élastique successif dans la condition d'accouplement dans laquelle les lames élastiques entourent en accouplement de forme du fût 11 cylindrique du téton 10, les lames élastiques 21' et 21" exerçant une contrainte élastique contre le fût 11 du téton 10 quand ce dernier est reçu dans la découpe 20.

Selon un mode de réalisation particulier de l'invention, l'élément de personnalisation 5 comprend au moins une gouttière 50 munie d'une rigole 500 débouchant vers le haut. La gouttière 50 est disposée dans la zone supérieure de l'élément de personnalisation 5, au-dessus des verres 52, 53 par exemple, et est configurée pour recevoir tout ou partie de l'élément de façade 2. La rigole 500 présente une largeur légèrement supérieure à l'épaisseur de l'élément de façade 2 afin d'assurer en bon maintien de l'élément de personnalisation 5 sur l'élément de façade 2.

On entend par zone supérieure de l'élément de personnalisation 5 la zone se trouvant en haut lorsque les lunettes sont en position portée.

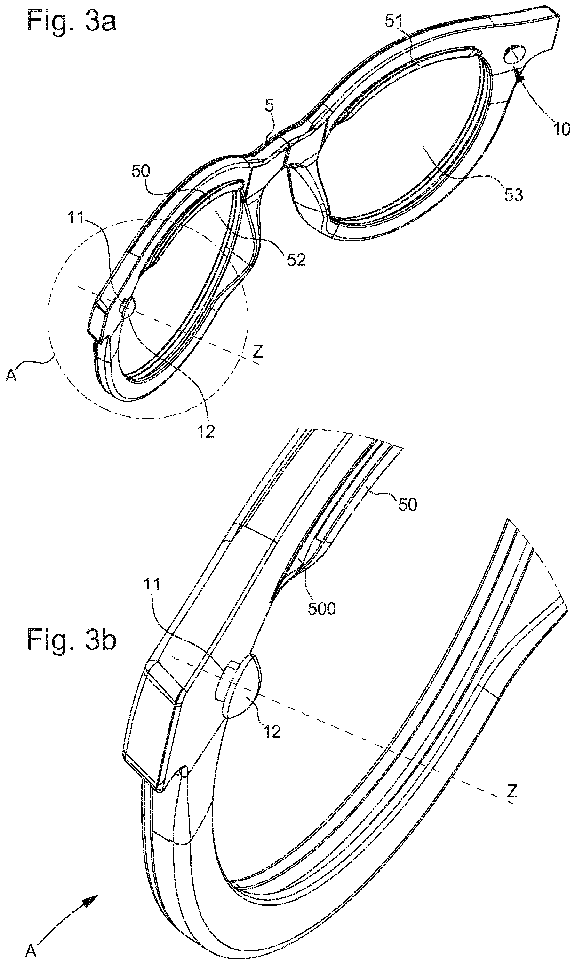

Comme on peut l'observer à la figure 3a, l'élément de personnalisation 5 comprend une gouttière 50 disposée au-dessus de chaque verre 52 et 53. On pourrait également imaginer une gouttière continue s'étendant sur tout ou partie de la longueur de l'élément de personnalisation 5.

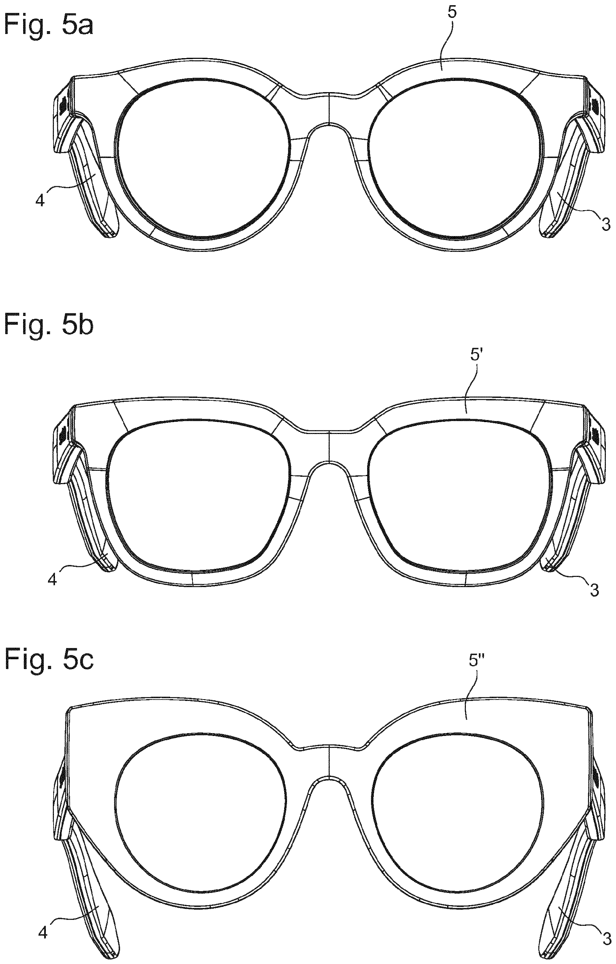

Comme on peut l'observer à la figure 5, il peut être prévu de disposer un matériau déformable élastiquement 501, tel qu'un matériau élastomère par exemple, au fond de la rigole 500 de la ou les gouttières 50, 51 de façon à combler un jeu éventuel après la fixation de l'élément de personnalisation 5 sur l'élément de façade 2.

Encore selon un mode de réalisation additionnel, l'élément de façade 2 est réalisé à partir d'un matériau ferromagnétique et le téton 10 est réalisé en un matériau magnétique et est fixé à l'élément de personnalisation 5. Selon ce mode de réalisation, l'élément de façade 2 ainsi que les moyens de verrouillage sont réalisés en un matériau métallique, comme du fer, du cobalt, du nickel ou un de leurs alliages, de manière à renforcer le maintien de l'élément de personnalisation 5 en position contre l'élément de façade 2. Ce mode de réalisation présente également pour avantage de permettre le maintien de l'élément de personnalisation 5 contre l'élément de façade 2 au cas où la lame élastique 21 viendrait à se casser.

Grâce à ces différents aspects de l'invention, on dispose d'une paire de lunettes 1 de conception simple permettant une personnalisation rapide et aisée. De tels exemples de personnalisation sont visibles aux figures 5a, 5b et 5c.

L'invention est pareillement applicable également à des armatures frontales avec des cercles porte-verres à profil partiellement ouvert ainsi que supportant, au besoin, des plaquettes d'appui nasal distinctes des cercles et appliquées de manière appropriée sur ceux-ci.

Bien entendu, la présente invention ne se limite pas à l'exemple illustré et est susceptible de diverses variantes et modifications qui apparaîtront à l'homme de l'art.

### NOMENCLATURE

1. Lunettes
10. Téton,
11. Fût du téton,
12. Renflement radial du téton
2. Elément de façade,
20. Découpe,
21, 21', 21". Lame élastique,
210, 210', 210". Première branche,
211, 211', 211". Seconde branche élastique,
212. Base trapézoïdale,
213. Cercle,
214. Embouchure,
22. Dégagement,
23. Pont,
24. Surface de contact,
3,4. Branches,
30,40. Charnières,
5,5',5". Elément de personnalisation,
50,51. Gouttières,
500. Rigole,
501. Couche matériau déformable élastiquement,
52,53. Verres,
M. Direction axiale,
S. Epaisseur de l'élément de façade,
Z. Direction axiale du téton.

## Revendications

1. Lunettes (1) constituées d'un élément de façade (2), formé à partir d'une seule partie découpée et pliée, et destiné à être relié à deux branches latérales (3,4), au moins un élément de personnalisation (5) supportant des verres (52, 53) configuré pour être fixé de manière amovible sur l'élément de façade (2) par l'intermédiaire de moyens de maintien complémentaires,
**caractérisé en ce que** les moyens de maintien complémentaires comprennent d'une part, au moins un téton (50), faisant saillie sensiblement perpendiculairement à partir de la face arrière de l'élément de personnalisation (5), et d'autre part, au moins une découpe (20), formée dans l'élément de façade (2), la découpe (20) étant agencée pour se déformer élastiquement de manière à exercer une force de rappel élastique sur le téton (10) après son introduction dans la découpe (20) pour maintenir élément de personnalisation (5) sur l'élément de façade (2), et **caractérisé en ce que** la découpe (20) comprend un dégagement (22) facilitant la déformation de la lame élastique (21) dans le plan de l'élément de façade (2), les moyens de maintien complémentaires comprenant une lame élastique (21) en forme de C dans la découpe (20), et la lame élastique (21) comprenant une première branche (210) venant de matière avec l'élément de façade (2), et un seconde branche élastique (211) libre.

2. Lunettes (1) selon la revendication 1, dans lesquelles la seconde branche élastique (211) libre est agencée pour se déformer dans le plan de l'élément de façade (2).

3. Lunettes (1) selon la revendication 1 ou 2, dans lesquelles l'ouverture (20) présente une forme en trou de serrure, à savoir une base trapézoïdale (212) surmontée d'un cercle (213), le haut de la base trapézoïdale (212) formant un passage plus étroit de manière à former un point dur lors du passage du téton (10) dans l'ouverture (20).

4. Lunettes (1) selon la revendication 3, dans lesquelles le diamètre du cercle (213) de l'ouverture (20) est sensiblement identique au diamètre du téton (10).

5. Lunettes (1) selon l'une des revendications 1 à 4, dans lesquelles l'élément de personnalisation (5) comprend au moins une gouttière (50) munie d'une rigole (500) débouchant vers le haut, disposée dans une zone supérieure de l'élément de personnalisation (5), la rigole (500) étant configurée pour recevoir tout ou partie de l'élément de façade (2).

6. Lunettes (1) selon la revendication 5, dans lesquelles la gouttière (50) comprend une couche (501) d'un matériau déformable élastiquement disposé sur le fond de la rigole (500).

7. Lunettes (1) selon l'une des revendications 1 à 6, dans lesquelles l'élément de façade (2) est formé à partir d'une seule partie découpée et pliée.

8. Lunettes (1) selon l'une des revendications 1 à 7, dans lesquelles l'élément de façade (2) est réalisé à partir d'un matériau ferromagnétique et le téton (10) est réalisé en un matériau magnétique de manière à renforcer le maintien de l'élément de personnalisation (5) en position contre l'élément de façade (2).

9. Lunettes (1) selon l'une des revendications 1 à 8, dans lesquelles le téton (10) comprend un fût (11) attaché à l'élément de personnalisation (5), le fût (11) se terminant par un renflement radial (12), et la longueur du fût (11) étant sensiblement identique à l'épaisseur de l'élément de façade (2).

10. Lunettes (1) selon l'une des revendications 1 à 9, dans lesquelles le téton (10) vient de matière avec l'élément de personnalisation (5).

11. Lunettes (1) selon l'une des revendications 1 à 10, dans lesquelles la découpe (20) comprend une paire de lames élastiques (21',21") réalisées avec une symétrie spéculaire par rapport à un plan médian de symétrie de la découpe correspondante dirigé transversalement par rapport à l'élément de façade (2).

12. Lunettes (1) selon l'une des revendications 1 à 11, dans lesquelles l'élément de façade (2) et la lame élastique (21,21',21") ont la même épaisseur S.

13. Lunettes (1) selon l'une des revendications 1 à 12, dans lesquelles l'élément de façade (2) est réalisé en matière plastique.

## Patentansprüche

1. Brille (1), die aus einem Vorderseitenelement (2) gebildet ist, das ausgehend von einem einzigen ausgeschnittenen und gebogenen Teil gebildet ist und dazu bestimmt ist, mit zwei seitlichen Bügeln (3, 4) verbunden zu werden, wobei mindestens ein Personalisierungselement (5), das Gläser (52, 53) trägt, so konfiguriert ist, dass es an dem Vorderseitenelement (2) über komplementäre Haltemittel abnehmbar befestigbar ist,
**dadurch gekennzeichnet, dass** die komplementären Haltemittel einerseits mindestens einen Ansatz (50), der von der Rückseite des Personalisierungselements (5) im Wesentlichen senkrecht vorsteht, und andererseits mindestens einen Ausschnitt (20) umfassen, der in dem Vorderseitenelement (2) gebildet ist, wobei der Ausschnitt (20) dafür ausgelegt ist, sich elastisch zu verformen, derart, dass auf den Ansatz (10) nach seiner Einführung in den Ausschnitt (20) eine elastische Rückstellkraft ausgeübt wird, um das Personalisierungselement (5) an dem Vorderseitenelement (2) zu halten, und **dadurch gekennzeichnet, dass** der Ausschnitt (20) einen Freiraum (22) aufweist, der die Verformung des elastischen Plättchens (21) in der Ebene des Vorderseitenelements (2) erleichtert, wobei die komplementären Haltemittel ein C-förmiges elastisches Plättchen (21) in dem Ausschnitt (20) aufweisen und wobei das elastische Plättchen (21) einen ersten Abschnitt (210), der einteilig mit dem Vorderseitenelement (2) ausgebildet ist, und einen zweiten, freien elastischen Abschnitt (211) aufweist.

2. Brille (1) nach Anspruch 1, wobei der zweite, freie elastische Abschnitt (211) dafür ausgelegt ist, sich in der Ebene des Vorderseitenelements (2) zu verformen.

3. Brille (1) nach Anspruch 1 oder 2, wobei die Öffnung (20) die Form eines Schlüssellochs, d. h. eine trapezförmige Basis (212), die von einem Kreis (213) überragt ist, aufweist, wobei die Höhe der trapezförmigen Basis (212) einen engeren Durchgang bildet, derart, dass beim Durchgang des Ansatzes (10) in der Öffnung (20) ein Druckpunkt gebildet wird.

4. Brille (1) nach Anspruch 3, wobei der Durchmesser des Kreises (213) der Öffnung (20) mit dem Durchmesser des Ansatzes (10) im Wesentlichen übereinstimmt.

5. Brille (1) nach einem der Ansprüche 1 bis 4, wobei das Personalisierungselement (5) mindestens eine Schiene (50) umfasst, die mit einer nach oben mündenden Rinne (500) versehen ist, die in einem oberen Bereich des Personalisierungselements (5) angeordnet ist, wobei die Rinne (500) konfiguriert ist, das gesamte Vorderseitenelement (2) oder einen Teil hiervon aufzunehmen.

6. Brille (1) nach Anspruch 5, wobei die Schiene (50) eine Schicht (501) aus einem elastisch verformbaren Material aufweist, das auf dem Boden der Rinne (500) angeordnet ist.

7. Brille (1) nach einem der Ansprüche 1 bis 6, wobei das Vorderseitenelement (2) aus einem einzigen ausgeschnittenen und gebogenen Teil gebildet ist.

8. Brille (1) nach einem der Ansprüche 1 bis 7, wobei das Vorderseitenelement (2) aus einem ferromagnetischen Material hergestellt ist und der Ansatz (10) aus einem magnetischen Material hergestellt ist, derart, dass der Halt des Personalisierungselements (5) in seiner Position gegen das Vorderseitenelement (2) verstärkt wird.

9. Brille (1) nach einem der Ansprüche 1 bis 8, wobei der Ansatz (10) einen Schaft (11) umfasst, der an dem Personalisierungselement (5) befestigt ist, wobei der Schaft (11) in einer radialen Verdickung (12) endet und wobei die Länge des Schafts (11) mit der Dicke des Vorderseitenelements (2) im Wesentlichen übereinstimmt.

10. Brille (1) nach einem der Ansprüche 1 bis 9, wobei der Ansatz (10) mit dem Personalisierungselement (5) einteilig ausgebildet ist.

11. Brille (1) nach einem der Ansprüche 1 bis 10, wobei der Ausschnitt (20) ein Paar elastischer Plättchen (21', 21") umfasst, die spiegelsymmetrisch in Bezug auf eine Mittel-Symmetrieebene des entsprechenden Ausschnitts, die transversal in Bezug auf das Vorderseitenelement (2) verläuft, ausgebildet sind.

12. Brille (1) nach einem der Ansprüche 1 bis 11, wobei das Vorderseitenelement (2) und das elastische Plättchen (21, 21', 21") die gleiche Dicke S aufweisen.

13. Brille (1) nach einem der Ansprüche 1 bis 12, wobei das Vorderseitenelement (2) aus Kunststoff hergestellt ist.

## Claims

1. Spectacles (1) comprising a front element (2), formed from a single part which is cut out and folded, and intended to be connected to two lateral temple arms (3, 4), and at least one personalisation element (5) supporting the lenses (52, 53) and configured to be fixed removably on the front element (2) by means of complementary retaining means,
**characterised in that** the complementary retaining means comprise, on the one hand, at least one stub (50) which projects substantially perpendicularly from the rear face of the personalisation element (5) and, on the other hand, at least one slot (20), formed in the front element (2), the slot (20) being designed to be deformed elastically so as to exert an elastic return force on the stub (10) after introduction thereof into the slot (20) in order to hold the personalisation element (5) on the front element (2), and **characterised in that** the slot (20) comprises a clearance (22) which facilitates deformation of the elastic strip (21) in the plane of the front element (2), the complementary retaining means comprise an elastic strip (21) in a C shape in the slot (20), the elastic strip (21) comprising a first branch (210) integral with the front element (2), and a second free elastic branch (211).

2. Spectacles (1) according to claim 1, in which the second free elastic branch (211) is designed to be deformed in the plane of the front element (2).

3. Spectacles (1) according to claim 1 or 2, in which the opening (20) has the shape of a keyhole, i.e. a trapezoidal base (212) surmounted by a circle (213), the height of the trapezoidal base (212) forming a narrower passage so as to form a hard point during passage of the stub (10) into the opening (20).

4. Spectacles (1) according to claim 3, in which the diameter of the circle (213) of the opening (20) is substantially identical to the diameter of the stub (10).

5. Spectacles (1) according to one of the claims 1 to 4, in which the personalisation element (5) comprises at least one gutter (50) provided with a groove (500) which opens at the top, disposed in an upper zone of the personalisation element (5), the groove (500) being configured to receive all or part of the front element (2).

6. Spectacles (1) according to claim 5, in which the gutter (50) comprises a layer (501) of an elastically deformable material disposed on the bottom of the groove (500).

7. Spectacles (1) according to one of the claims 1 to 6, in which the front element (2) is formed from a single part which is cut out and folded.

8. Spectacles (1) according to one of the claims 1 to 7, in which the front element (2) is produced from a ferromagnetic material and the stub (10) is produced in magnetic material so as to reinforce holding of the personalisation element (5) in position against the front element (2).

9. Spectacles (1) according to one of the claims 1 to 8, in which the stub (10) comprises a stem (11) attached to the personalisation element (5), the stem (11) ending with a radial bulge (12), and the length of the stem (11) being substantially identical to the thickness of the front element (2).

10. Spectacles (1) according to one of the claims 1 to 9, in which the stub (10) is integral with the personalisation element (5).

11. Spectacles (1) according to one of the claims 1 to 10, in which the slot (20) comprises a pair of elastic strips (21', 21") produced with a mirror-like symmetry relative to a median plane of symmetry of the corresponding slot directed transversely relative to the front element (2).

12. Spectacles (1) according to one of the claims 1 to 11, in which the front element (2) and the elastic strip (21, 21', 21 ") have the same thickness S.

13. Spectacles (1) according to one of the claims 1 to 12, in which the front element (2) is produced in plastic material.
